Europäisches Patentamt

European Patent Office

Office européen des brevets

(11) Veröffentlichungsnummer: **0 302 992**
**B1**

(12) **EUROPÄISCHE PATENTSCHRIFT**

(51) Int. Cl.⁵: **B23B 31/02**

(45) Veröffentlichungstag der Patentschrift:
**28.11.90**

(21) Anmeldenummer: **88103566.1**

(22) Anmeldetag: **08.03.88**

(54) Nachspannendes Bohrfutter.

(30) Priorität: **14.08.87 DE 3727147**

(43) Veröffentlichungstag der Anmeldung:
**15.02.89 Patentblatt 89/7**

(45) Bekanntmachung des Hinweises auf die Patenterteilung:
**28.11.90 Patentblatt 90/48**

(84) Benannte Vertragsstaaten:
**CH DE ES FR GB IT LI**

(56) Entgegenhaltungen:
**DE-A- 2 500 298**
**GB-A- 1 203 152**
**US-A- 3 545 776**

(73) Patentinhaber: **Röhm, Günter Horst,**
**Heinrich-Röhm-Strasse 50, D-7927 Sontheim(DE)**

(72) Erfinder: **Röhm, Günter Horst,**
**Heinrich-Röhm-Strasse 50, D-7927 Sontheim(DE)**

(74) Vertreter: **Fay, Hermann, Dipl.-Phys. Dr. et al, Dipl.-Phys.**
**Hermann Fay und Dr. Joachim Dziewior**
**Ensingerstrasse 21 Postfach 17 67,**
**D-7900 Ulm/Donau(DE)**

## Beschreibung

Die Erfindung betrifft ein nachspannendes Bohrfutter mit einem eine Aufnahme für eine Bohrspindel bildenden, ein Spanngewinde aufweisenden Futterkörper, einer am Futterkörper drehbar geführten Spannhülse, ferner mit im Bohrfutter axial abgestützten Spannbacken, die zwischen sich eine mit der Futterachse koaxiale Einspannöffnung für den Werkzeugschaft bilden und an der Spannhülse schräg zur Futterachse verschiebbar geführt sind, so daß sie sich bei ihrer Verschiebung auch radial zur Futterachse verstellen und den Durchmesser der Einspannöffnung verändern, und mit einem Sperring, der am Futterkörper jeweils zwischen zwei Endstellungen in Umfangsrichtung gegen Federkraft verdrehbar und axial verschiebbar und in Umfangsrichtung mit der Spannhülse über zwei Zahnkränze kuppelbar ist, die in der dem eingekuppelten Zustand entsprechenden axialen Endstellung des Sperrings miteinander im Eingriff stehen.

Nachspannende Bohrfutter dieser Art sind beispielsweise aus der DE-A 3 432 918 bekannt und ermöglichen ein Spannen sowohl von Hand mit Hilfe der Spannhülse als auch im Sinne eines selbsttätigen Nachspannens während des Bohrens durch die Reaktionsmomente des Werkzeugs, indem der Drehwiderstand des Werkzeugs über die Spannbacken in gleicher Weise wie die Spannhülse eine Spannbewegung am Spanngewinde bewirkt. Dazu sind bei dem bekannten Bohrfutter die Spannbacken in axialer Richtung drehschlüssig an einem drehbar am Futterkörper gelagerten Druckstück abgestützt und die Spannhülse ist im Spanngewinde axial verstellbar geführt. Der an der Spannhülse im Eingriff stehende Sperring dient einerseits der Nachspannbegrenzung. Das Bohrfutter kann sich dank dem Sperring beim Bohrbetrieb nicht so fest zuziehen, daß es nicht mehr von Hand gelöst werden könnte. Andererseits hält der Sperring mit Hilfe der Federkraft, die ihn in dem dem Schließen des Bohrfutters entsprechenden Drehsinn der Spannhülse beaufschlagt, die Spannbacken über die Spannhülse in ständiger Anlage am Werkzeugschaft, bis die Nachspannbegrenzung einsetzt. Um den Eingriff der sich axial verstellenden Spannhülse am Sperring aufrecht zu erhalten, bedarf es einer drehbar und axial unverschiebbar am Futterkörper geführten Kullungshülse, die einerseits über die Zahnkränze direkt mit dem Sperring kuppelbar und andererseits axial verschiebbar und drehschlüssig mit der Spannhülse verbunden ist. Der Sperring ist von zwei Schraubendruckfedern beaufschlagt, von welchen die eine in axialer Richtung zwischen dem Sperring und einer Ringschulter der Antriebsspindel und die andere in Umfangsrichtung zwischen dem Sperring und dem Futterkörper in einer sich über einen Kreisbogenabschnitt im Sperring erstreckenden Nut angeordnet ist. Im ganzen ergibt dies für das bekannte Bohrfutter einen aufwendigen Futteraufbau.

Weiter ist ein nachspannendes Bohrfutter ohne Nachspannbegrenzung bekannt, bei dem der Futterkörper eine mit ihren Mantelgeraden jeweils parallel zu den Führungsrichtungen der Spannbacken verlaufende Kegelfläche aufweist, auf der sich ein Spanngewinde in Form eines Trapezgewindes befindet, das an jeder Spannbacke mit einer Querverzahnung im Eingriff steht, die sich an der Spannbacke parallel zu ihrer Führungsrichtung erstreckt. Die Spannhülse ist an ihrem axial hinteren Teil über Wälzkörper an einem Ringbund des Futterkörpers gegen Axialverstellungen festgehalten und die in ihr geführten, im wesentlichen als zylindrische Bolzen ausgebildeten Spannbacken laufen in der Spannhülse in im hinteren Hülsenteil endenden Sackbohrungen, die daher in der Spannhülse von ihrem axial vorderen Ende her gebohrt werden müssen, wo sie wegen ihres zur Futterachse geneigten Verlaufs auf einem entsprechend kleinen Teilkreis liegen und sich gegenseitig überlappen, so daß sie nur mit geringer Genauigkeit hergestellt werden können. Nicht nur die Spanngenauigkeit, sondern auch die Nachspannwirkung dieser bekannten Bohrfutter ist gering.

Der Erfindung liegt die Aufgabe zugrunde, ein Bohrfutter der eingangs genannten Art bezüglich seines konstruktiven Aufbaus so auszubilden, daß es bei hoher Spanngenauigkeit und starker Nachspannwirkung aus wenigen Teilen besonders kostengünstig hergestellt und sehr einfach im Betrieb gehandhabt werden kann.

Diese Aufgabe wird nach der Erfindung dadurch gelöst, daß der Futterkörper eine mit ihren Mantelgeraden jeweils parallel zur Führungsrichtung der Spannbacken verlaufende Kegelfläche aufweist, auf der sich das Spanngewinde befindet, das an jeder Spannbacke mit einer Querverzahnung im Eingriff steht, die sich an der Spannbacke parallel zu ihrer Führungsrichtung erstreckt, wobei die der Einspannöffnung zugewandten Flanken der Gewindegänge des Spanngewindes und die daran zur Anlage kommenden Zahnflanken der Querverzahnung der Spannbacken im wesentlichen senkrecht zur Führungsrichtung der jeweiligen Spannbacke gerichtet sind, daß die mit ihrem geführten Teil im wesentlichen als zylindrische Bolzen ausgebildeten Spannbacken in der gegen Axialverschiebungen am Futterkörper festgehaltenen Spannhülse in Führungsbohrungen laufen, die an der hinteren Stirnfläche der Spannhülse offen münden und dort von dem Sperring verdeckt sind, und daß die Federkraft den Sperring in dem dem Öffnen des Bohrfutters entsprechenden Drehsinn der Spannhülse beaufschlagt.

Ein solches Bohrfutter besteht nur aus wenigen Bauteilen und kann daher kostengünstig hergestellt und montiert werden. Die Spannbacken sind im Spanngewinde unmittelbar am Futterkörper abgestützt. Die Abstützung der Spannbacken an den zu ihre Führungsrichtung im wesentlichen senkrechten Gewindeflanken erzeugt keine die Spannbacken quer zu ihrer Führungsrichtung gegen die Spannhülse drückenden Kraftkomponenten, so daß die der Verstellung der Spannbacken insbesondere beim Nachspannen entgegen wirkenden Reibungskräfte gering sind. Das ergibt eine optimale Nachspannwirkung. Da die Führungsbohrungen am hinteren Ende der Spannhülse offen enden, können sie von dort aus in die Spannhülse eingebracht werden.

Dort liegen sie auf einem großen Teilkreis weit auseinander und können mit sehr hoher Genauigkeit hergestellt werden, was eine entsprechend gute Spanngenauigkeit des Bohrfutter ergibt. Da die Spannhülse am Futterkörper axial unverstellbar ist, kann sie über die Zahnkränze unmittelbar mit dem Sperring im Kupplungseingriff stehen. Die Federkraft sorgt in Drehrichtung dafür, daß der Sperring bei jedem neuen Einspannen eines Werkzeuges in seine ausgangslage zurückkehrt, aus der er sich in Schließrichtung der Spannhülse bis zum Einsetzen der Nachspannbegrenzung relativ zum Futterkörper verdrehen kann.

Eine bevorzugte Ausführungsform der Erfindung ist dadurch gekennzeichnet, daß das der Einspannöffnung zugewandte Ende des Futterkörpers von einem mit der Futterachse koaxialen Führungszapfen gebildet ist, der über eine radial auswärts gerichtete Ringfläche an das verjüngte Ende der Kegelfläche anschließt, und daß die Spannhülse mit einer radial einwärts gerichteten Ringschulter an der Umfangsfläche des Führungszapfens geführt ist. Im Ergebnis erfolgt die Führung der Spannhülse axial beidseits der Kegelfläche am Futterkörper mit dem Vorteil besonders hoher Führungsgenauigkeit. Weiter empfiehlt es sich, den Führungszapfen im Durchmesser so zu wählen, daß die Spannhülse im Bereich der Ringschulter rundum vollständig geschlossene Führungsbohrungen für die Spannbacken aufweist. Dies ergibt eine gute Führung der Spannbacken selbst noch bei kleinen Spanndurchmessern und zusammen mit der hohen Führungsgenauigkeit der Spannhülse eine hohe Spanngenauigkeit insgesamt.

Wegen der überraschend starken Nachspannwirkung des erfindungsgemäßen Bohrfutters kann auf eine Wälzkörperabstützung zwischen Spannhülse und Futterkörper ohne weiteres verzichtet werden. Als einfachste Ausführungsform empfiehlt es sich, die Spannhülse und den Futterkörper durch einen Federring aneinander zu halten, der in sich gegenüber liegende Ringnuten an Futterkörper und Spannhülse greift und tellerfederartig ausgebildet ist, so daß er die Spannhülse relativ zum Futterkörper axial nach vorn drückt, also in Richtung zum Werkzeug. Unter der Wirkung der Nachspannkräfte verliert dieser Federring seine axiale Federwirkung, da er in den Ringnuten bis zur starren Anlage am Futterkörper und an der Spannhülse verformt wird. Wird aber das Bohrfutter in der seinem Öffnen entsprechenden Drehrichtung der Spannhülse betrieben, beispielsweise als Schraubendreher zum Ausdrehen von Schrauben, so hat der Federring eine elastische Verspannung der Spannhülse gegenüber dem Futterkörper zur Folge, die einem unbeabsichtigten Lösen des Bohrfutters entgegen wirkt.

Eine andere besonders leicht herzustellende und zu montierende und vor allem deswegen besonders bevorzugte Ausführungsform ist dadurch gekennzeichnet, daß die Spannhülse an ihrem dem Sperring zugewandten Ende einen geteilten Ring trägt, der mit seinem radial inneren Rand in eine Ringnut des Futterkörpers greift und an seinem radial äußeren Rand den der Spannhülse zugeordneten Zahnkranz bildet. Im einzelnen empfiehlt es sich, daß der geteilte Ring von plattenartigen Ringsegmenten gebildet ist, die auf der das Ende der Spannhülse bildenden ringförmigen Stirnfläche, insbesondere mit Schrauben lösbar befestigt sind. Vorteilhaft ist hier, daß der geteilte Ring und insbesondere die Ringsegmente wesentlich einfacher mit dem der Spannhülse zugeordneten Zahnkranz versehen werden können als die Spannhülse unmittelbar selbst.

Zweckmäßig trägt der Futterkörper zur Drehbegrenzung des Sperrings einen radial abstehenden Anschlagstift, der in eine zum Futterkörper und zur Spannhülse hin offene Ausnehmung des Sperrings greift, die in Umfangsrichtung größer als die Dicke des Anschlagstiftes ist und deren Enden in Umfangsrichtung Anschlagflächen für den Anschlagstift bilden. Das in Umfangsrichtung freie Spiel des Anschlagstiftes in der Ausnehmung bestimmt die Größe des Drehweges, über den sich die Spannhülse zur Nachspannung verdrehen kann, bis die Nachspannbegrenzung einsetzt. Da die Ausnehmung zur Spannhülse hin offen ist, kann der Sperring bei der Montage axial über den Futterkörper von dessen hinterem Ende her geschoben werden, bis der Anschlagstift in die Ausnehmung eingetreten ist. Um übrigen ist die Ausnehmung in axialer Richtung selbstverständlich so groß, daß der Sperring axial zwischen seinen beiden Endstellungen verschoben werden kann, ohne daß der Anschlagstift aus der Ausnehmung austritt. Der Sperring weist dann zweckmäßig radial außerhalb der Ausnehmung den ihm zugeordneten Zahnkranz auf.

Eine in diesem Zusammenhang andere sehr vorteilhafte Ausführungsform, die in Drehrichtung wesentlich höhere Kraftbelastungen erträgt, ist dadurch gekennzeichnet, daß zur Drehbegrenzung des Sperrings der Futterkörper an seiner Umfangsfläche eine ebene Sekantenfläche aufweist, der gegenüber an der inneren Umfangsfläche des Sperrings zwei ebene anschlagflächen vorgesehen sind, die in einer zur Futterachse parallelen Kante aneinander grenzen und um diese Kante als Achse um den für den Sperring als größtmöglich vorgebenen Drehwinkel gegeneinander geneigt sind. In den beiden die Drehung begrenzenden Endstellungen des Sperrings liegt die eine oder andere der Anschlagflächen der Sekantenfläche an, was in diesen Flächen eine geringe spezifische Kraftbeanspruchung ergibt. Dies läßt sich noch weiter dadurch verbessern, daß die Sekantenfläche und die Anschlagflächen paarweise einander diametral gegenüber liegend am Futterkörper, bzw. Sperring vorgesehen sind. Zwischen der Sekantenfläche und den ihr gegenüber liegenden Anschlagflächen entsteht ein Freiraum. Es empfiehlt sich, diesen Freiraum an einen durch die Wand des Sperrings, insbesondere radial, nach außen führenden Reinigungskanal anzuschließen, so daß sich Bohrrückstände und andere Verunreinigungen nicht im Freiraum ansammeln und den Drehwinkel verkleinern und damit die Nachspannwirkung beeinträchtigen können.

Zur Erzeugung der in Umfangsrichtung wirkenden Federkraft ist zweckmäßig eine schraubenfeder vorgesehen, die in einer Ringnut zwischen dem Futterkörper und dem Sperring angeordnet ist und deren Enden in Umfangsrichtung einerseits am Futterkörper, andererseits am Sperring abgestützt sind. Die Schraubenfeder kann auch den Sperring in seiner dem eingekuppelten Zustand entsprechenden axialen Endstellung halten, wozu die Schraubenfeder zwecks Erzeugung der axial wirkenden Federkraft auch axial einerseits am Futterkörper und andererseits am Sperring abgestützt ist. Damit genügt eine einzige Schraubenfeder, um den Sperring sowohl axial an der Spannhülse im Kupplungseingriff zu halten als auch in Drehrichtung jeweils in den Ausgangszustand zurückzustellen.

Nach einem anderen sehr vorteilhaften Vorschlag ist eine den Sperring in seinen dem eingekuppelten bzw. ausgekuppelten Zustand entsprechenden beiden axialen Endstellungen haltende Rasteinrichtung vorgesehen, welche die Drehung des Sperrings unbehindert läßt. Das hat den Vorzug, daß der Sperring auch im entkuppelten Zustand feststellbar und dadurch insgesamt leichter gehandhabt werden kann. Im einzelnen empfiehlt sich eine Ausführungsform, die dadurch gekennzeichnet ist, daß die Rasteinrichtung mindestens eine radial am Sperring gegen den Futterkörper vorstehende Rastzunge aufweist, die in axialer Richtung elastisch vorformbar ist und je nach Endstellung des Sperrings in eine von zwei parallel nebeneinander am Futterkörper vorgesehene Rastnuten greift, in welchen die Rastzunge in Umfangsrichtung verschiebbar ist. Zweckmäßig sind die Rastzungen zu mehreren verteilt über den Umfang des Sperrrings angeordnet und die Rastnuten als Ringbuten ausgebildet. Auch empfiehlt es sich, daß die Rastzungen mit der Zungenwurzel an den Zahnkranz des Sperrings angrenzen. Dies bietet die Möglichkeit, die Rastzungen radial mit großer, ihre elastische Verformung erleichternder Länge freizuschneiden bei gleichzeitig axial geringer Baulänge des Sperrrings.

Die Führung des Sperrings kann zweckmäßig dadurch verbessert werden, daß der Sperring einen an seinen Zahnkranz angrenzenden Kragen aufweist, der den Zahnkranz und die Mündungen der Führungsbohrungen für die Spannbacken an der Spannhülse axial übergreift und an der Umfangsfläche der Spannhülse geführt ist.

Im folgenden wird die Erfindung an einem in der Zeichnung dargestellten Ausführungsbeispiel näher erläutert; es zeigen:

Fig. 1 ein Bohrfutter nach der Erfindung teils im Axialschnitt, teils in Seitenansicht

Fig. 2 einen schnitt in Richtung II-II durch das Bohrfutter nach Fig. 1,

Fig. 3 das Detail III in Fig. 1 in vergrößerter Darstellung

Fig. 4 einen Schnitt durch eine andere Ausführungsform des Bohrfutters längs der in Fig. 5 eingezeichneten Schnittlinie IV-IV,

Fig. 5 eine Draufsicht auf das Bohrfutter nach Fig. 4 in Richtung des dort eingetragenen Pfeils V,

Fig. 6 den Schnitt VI-VI in Fig. 4,

Fig. 7 eine vergrößerte Teildarstellung des Gegenstandes nach Fig. 4 aus deren linker Hälfte, und

Fig. 8 eine vergrößerte Teildarstellung des Gegenstandes nach Fig. 4 aus deren rechter Hälfte.

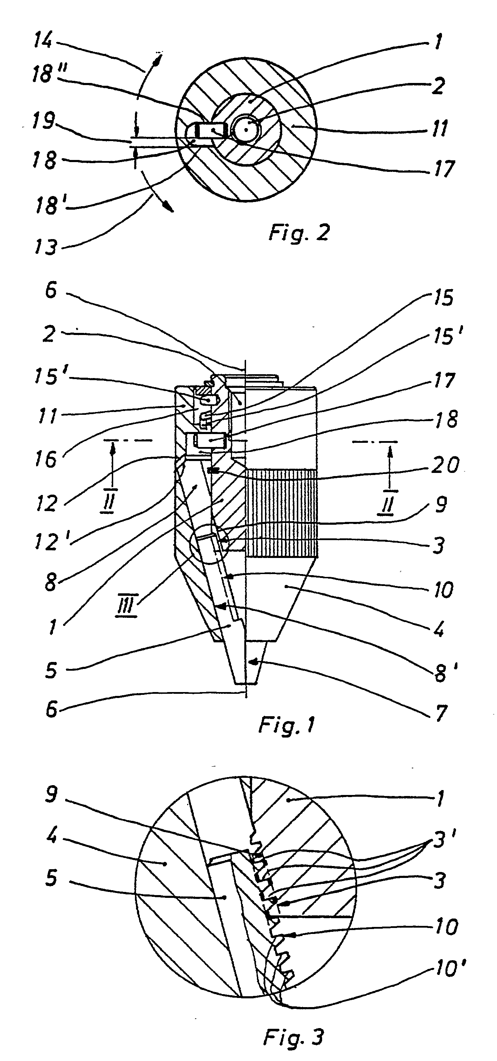

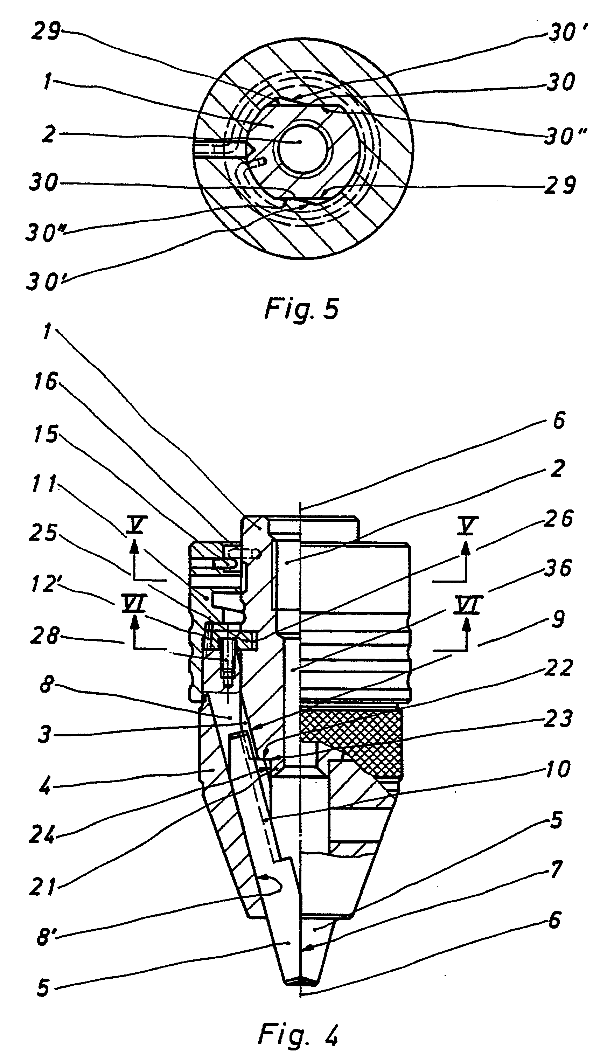

Der Futterkörper 1 des in den Fig. 1 bis 3 dargestellten nachspannenden Bohrfutters bildet eine Aufnahme 2 für eine nicht dargestellte Bohrspindel und besitzt ein Spanngewinde 3, das beim Verdrehen einer am Futterkörper 1 geführten, axial unverschiebbaren Spannhülse 4 zur Verstellung von im Spanngewinde 3 axial abgestützten Spannbacken 5 führt. Diese Spannbacken 5 bilden zwischen sich eine mit der Futterachse 6 koaxiale, in der Zeichnung allerdings vollständing geschlossene Einspannöffnung 7 für den Werkzeugschaft und sind an der Spannhülse 4 schräg zur Futterachse 6 in Bohrungen 8 bzw. zum Futterkörper 1 und zum Spanngewinde 3 hin offenen Nuten 8' geführt. Als Folge dieser Schrägführung können sich die Spannbacken 5 bei ihrer Verschiebung auch radial zur Futterachse 6 verstellen und den Durchmesser der Einspannöffnung 7 verändern. Das Spanngewinde 3 befindet sich auf einer Kegelfläche 9 des Futterkörpers 1, die mit ihren Mantelgeraden jeweils parallel zur Führungsrichtung der Spannbacken 5 verläuft. Das Spanngewinde 3 steht an jeder Spannbacke 5 mit einer Querverzahnung 10 im Eingriff, die sich an der Spannbacke 5 parallel zu ihrer Führungsrichtung erstreckt. Weiter ist ein Sperring 11 vorgesehen, der am Futterkörper 1 gegen Federkraft jeweils zwischen zwei Endstellungen sowohl verdrehbar als auch axial verschiebbar ist. Der Sperring 11 kann in Umfangsrichtung mit der Spannhülse 4 über zwei Zahnkränze 12, 12' verbunden werden, die in der in der Zeichnung dargestellten vorderen axialen Endstellung des Sperrings 11 miteinander im Eingriff stehen. Die Federkraft beaufschlagt den Sperring 11 in dem dem Öffnen des Bohrfutters entsprechenden, durch den Pfeil 13 in Fig. 2 angedeuteten Drehsinn der Spannhühlse 4, was zur Folge hat, daß sich der Sperring 11 im von der Spannhülse 4 entkuppelten Zustand in Umfangsrichtung in derjenigen Drehstellung befindet, aus der er sich in der dem schließen des Futters entsprechenden, durch den Pfeil 14 angedeuteten Drehsinn der Spannhülse 4 in seine andere Endstellung verdrehen kann. Zur Erzeugung der Federkraft ist eine axial und in Umfangsrichtung wirkende einzige Schraubenfeder 15 vorgesehen. Sie befindet sich in einer Ringnut 16 zwischen dem Futterkörper 1 und dem Sperring 11. Ihre Enden 15' sind sowohl axial als auch in Umfangsrichtung einerseits am Futterkörper 1, andererseits am Sperring 11 abgestützt, wozu diese Enden 15' axial bzw. radial abgewinkelt und im wesentlichen formschlüssig in Löcher am Futterkörper 1 bzw. Sperring 11 eingesetzt sind. Wie insbesondere Fig. 3 zeigt, sind die der Einspannöffnung 7 zugewandten Flanken 3' der Gewindegänge des Spanngewindes 3 und die daran zur Anlage kommenden Zahnflanken 10' der Querverzahnung 10 der Spannbacken 5 im wesentlichen senkrecht zur Führungsrichtung der jeweiligen Spannbacke 5 gerichtet. Die axiale Abstützung der Spannbacken 5 an diesen Gewindeflanken 3', 10' kann daher nicht zu Kraftkomponenten führen, welche die Spannbacken 5 quer zu ihrer Führungsrichtung gegen die Spannhülse 4 drücken und daher eine erhöhte Reibung der Spannbacken 5 an der Spannhülse 4 zur Folge hätten. Die Spannbacken selbst sind in ihrem in den Bohrungen 8 geführten Teil als zylindrische Bolzen ausgebildet. Die Bohrungen 8 sind an der hinteren Stirnfläche der Spannhülse 4 offen und können leicht von dort aus mit hoher Genauigkeit in der Spannhülse 4 hergestellt werden. Der Sperring 11 deckt die Mündungen der Führungsbohrungen 8 ab.

Zur Drehbegrenzung des Sperrings 11 trägt der Futterkörper 1 einen radial abstehenden Anschlagstift 17, der in eine zum Futterkörper 1 und zur Spannhülse 4 hin offene Ausnehmung 18 des Sperrrings 11 greift. Die Ausnehmung 18 ist in Umfangsrichtung um den Nachspannweg (Doppelpfeil 19 in Fig. 2) größer als die Dicke des Anschlagstiftes 17. Ihre Enden 18', 18'' in Umfangsrichtung bilden Anschlagflächen für den Anschlagstift 17, die somit die beiden Endstellungen für den Sperring 11 in Umfangsrichtung festlegen. Außerhalb der Ausnehmung 18 trägt der Sperring 11 an seinem der Spannhülse 4 zugewandten Rand einen 12 der beiden Zahnkränze 12, 12'. Der andere Zahnkranz 12' befindet sich unmittelbar gegenüber am Rande der Spannhülse 4. Die Ausnehmung 18 ist axial so tief, daß bei der Axialverschiebung des Sperrings zwischen seinen beiden axialen Endstellungen der anschlagstift 17 nicht aus der Ausnehmung 18 austreten und diese Axialverstellung auch nicht behindern kann.

Die Spannhülse 4 und der Futterkörpe 1 sind durch einen Federring 20 aneinander gehalten, der in sich gegenüber liegende Ringnuten an Futterkörper 1 und Spannhülse 4 greift. Er ist tellerfederartig ausgebildet, so daß er die Spannhülse 4 relativ zum Futterkörper 1 axial nach vorn drücken kann. Unter der Wirkung der beim Nachspannen auftretenden axialen Kräfte zwischen der Spannhülse 4 und dem Futterkörper 1 ist erstere axial relativ zum Futterkörper 1 unter Verformung des Federringes 20 soweit zurück gedrückt, daß der Federring 20 seine Federwirkung verliert. Bei der Nachspannung ist daher dieser Federring 20 unwirksam. Wird aber das Bohrfutter in der seinem Öffnen entsprechenden Drehrichtung betrieben beispielsweise zum Ausdrehen von schrauben oder dergl., kann der Federring 20 beim geschlossenen Bohrfutter zu einer axialen Verspannung zwischen Spannhülse 4 und Futterkörper 1 führen, die einem ungewollten Öffnen des Bohrfutters entgegen wirkt.

Der Kupplungseingriff der Zahnkränze 12, 12' kann so ausgebildet sein, daß sich der Sperring 11 gegen die Kraft der Schraubenfeder 15 selbsttätig von Zahn zu Zahn aus dem Kupplungseingriff an der Spannhülse 4 heraushebt, wenn die Spannhülse 4 von Hand verdreht und dabei der Sperring 11 durch Anschlag am Anschlagstift 17 in der einen oder anderen Endstellung festgehalten wird. Andererseits muß der Kupplungseingriff aber fest genug sein, daß ein selbsttätiges gegenseitiges Verdrehen des Sperrings 11 und der Spannhülse 4 im Bohrbetrieb ausgeschlossen ist. Durch Wahl der axialen Kraft der Schraubenfeder 15 und der Form der Zahnflanken an den Zahnkränzen 12, 12' kann das Kupplungsverhalten zwischen dem Sperring 11 und der Spannhülse 4 weitgehend diesen Anforderungen entsprechend eingestellt werden. Es besteht aber grundsätzlich auch die Möglichkeit, den Kupplungseingriff so zu gestalten, daß es zum Öffnen der Kupplung in jedem Fall erforderlich ist, den Sperring 11 von Hand axial gegen die Kraft der Schraubenfeder 15 aus dem Kupplungseingriff an der Spannhülse 4 zurückzuschieben. Dabei bewirkt die Schraubenfeder 15 mit ihrer in Umfangsrichtung wirkenden Kraft ein Verdrehen des Sperrings 11 in seine dem offenen Futter entsprechende Ausgangsstellung, in der der Anschlagstift an dem Ende 18' der Ausnehmung 18 anliegt. Nach jeder neuen Einspannung eines Werkzeugs kann sich daher der Sperring 11 wieder in dem dem Schließen des Bohrfutters entsprechenden Drehsinn der Spannhülse bis zum Anschlag am anderen Ende 18 der Ausnhemung verdrehen, also bis er die Nachspannung begrenzt und über den Eingriff an der Spannhülse 4 deren weiteres nachspannendes Verdrehen verhindert. Dabei ist die diesem Verdrehen des Spannringes 4 entgegen gerichtete Kraft der Schraubenfeder 15 selbstverständlich so gering, daß sie das bei der Nachspannung stattfindende Verdrehen des Sperrings 11 gegenüber dem Futterkörper 1 nicht behindern kann.

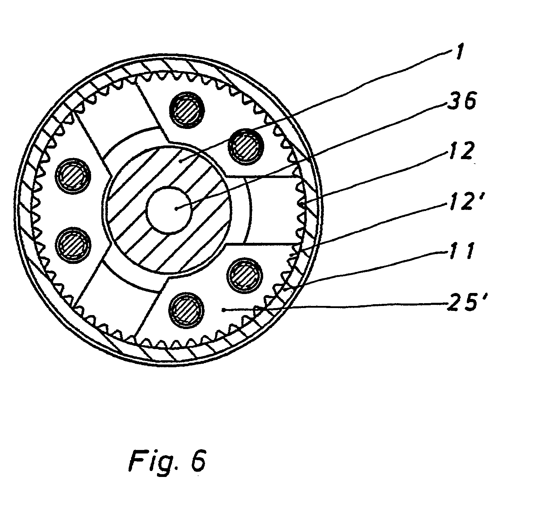

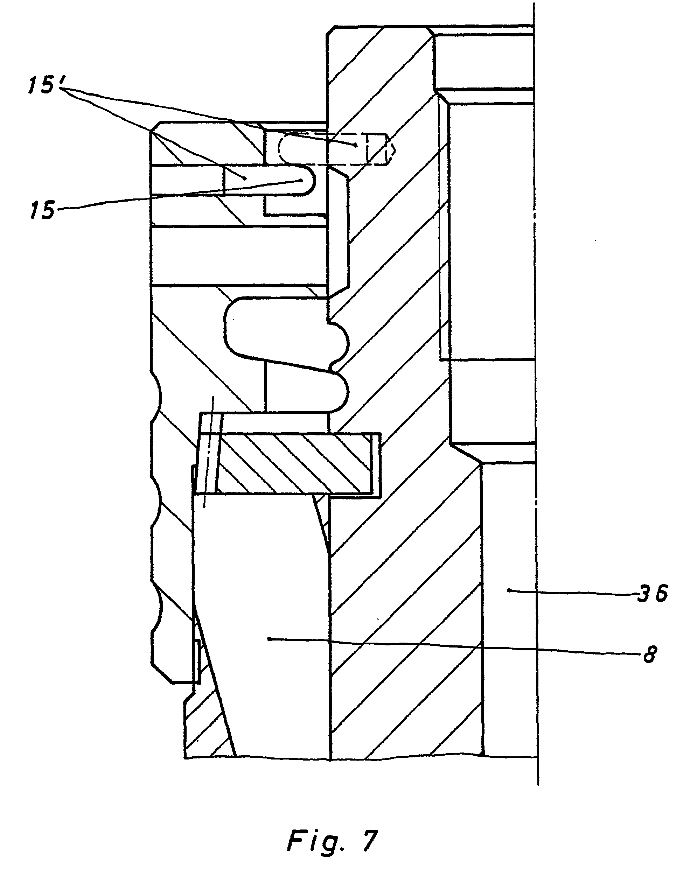

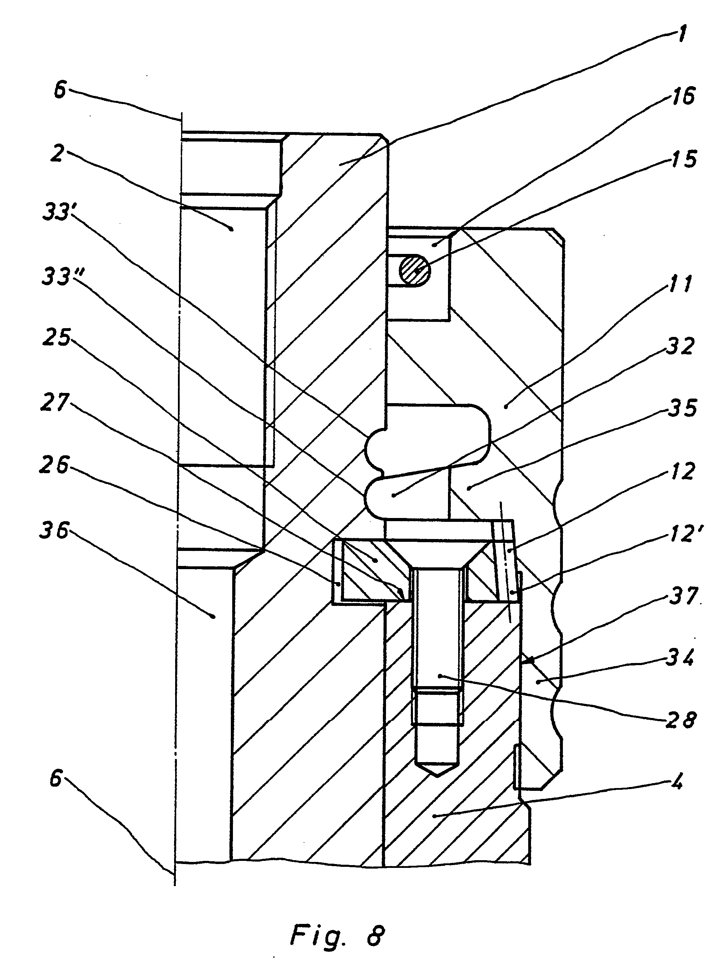

In der Ausführungsform nach den Fig. 4 bis 8 sind einander entsprechende Teile mit denselben Bezugsziffern versehen, so daß sich insoweit eine nochmalige Beschreibung des Ausführungsbeispiels erübrigt. Anders ist zunächst, daß die Schraubenfeder 15 nur in Umfangsrichtung wirkt, also nicht den Sperring 11 auch axial im eingekuppelten Zustand an der Spannhülse 4 hält. Hierfür dient vielmehr eine den Sperring 11 auch im ausgekuppelten Zustand haltende Rasteinrichtung, die von Rastzungen 32 und Rastnuten 33', 33'' gebildet sind. Die Rastzungen 32 sind gleichmäßig über den Umfang des Sperrings 11 verteilt angeordnet und greifen in die als parallele Ringnuten ausgebildeten Rastnuten 33', 33''. Die Rastzungen 32 stehen am Sperring 11 radial gegen den Futterkörper 1 vor, an dem sich die Rastnuten befinden. Die Rastzungen 32 sind in axialer Richtung elastisch verformbar und rasten je nach Endstellung des Sperrings 11 in eine der beiden Rastnuten 33', 33'' ein, in denen sie in Umfangsrichtung frei verschiebbar sind, so daß die Rasteinrichtung die Drehung des Sperrings 11 auf dem Futterkörper 1 nicht behindert, und zwar sowohl im ein- als auch im ausgekuppelten Zustand des Sperrings. Die Rastzungen 32 grenzen mit der Zungenwurzel 35 an den Zahnkranz 12 des Sperrings 11, so daß die Rastzungen 32 ohne aufwendig große axiale Bauhöhe des Sperrings 11 eine radial große freie Länge und damit gute Beweglichkeit in axialer Richtung besitzen können.

Weiter ist zur Drehbegrenzung des Sperrings 11 der Futterkörper 1 mit zwei einander diametral gegenüber liegenden Sekantenflächen 29 versehen, denen jeweils gegenüber liegend an der inneren Umfangsfläche des Sperrings 11 zwei ebene Anschlagflächen 30', 30'' vorgesehen sind. Sie grenzen in einer zur Futterachse 6 parallelen Kante 30 an einander und sind um diese Kante 30 als Achse gegeneinander geneigt, und zwar um denjenigen Winkel, der als maximaler Drehwinkel für den Sperring 11 vorgesehen ist. Der Freiraum zwischen der Sekantenfläche 29 und den Anschlagsflächen 30', 30" ist an einen radial durch die Wand des Sperrings 11 nach außen ins Freie führenden Reinigungskanal 31 angeschlossen.

Anstelle des Federrings 20 trägt die Spannhülse 4 an ihrem dem Sperring 11 zugewandten Ende einen mehrfach geteilten Ring 25. Er greift mit seinem radial inneren Rand in eine Ringnut 26 des Futterkörpers 1 und bildet an seinem radial äußeren Rand den der Spannhülse 4 zugeordneten Zahnkranz 12'. Der Ring 25 ist von plattenartigen Ringsegmenten 25' gebildet, die mit Schrauben 28 auf der das Ende der Spannhülse 4 bildenden ringförmigen Stirnfläche 27 lösbar befestigt sind. Zur Montage des Futters wird die Spannhülse 4 axial von vorn über den Futterkörper 1 geschoben und nach dem Einsetzen der Spannbacken 5, wenn diese im Spanngewinde 3 gefaßt haben, mit den in die Ringnut 26 eingesteckten Ringsegmenten 25' verbunden.

Im übrigen ist die Spannhülse 4 axial auch vor der Kegelfläche 9 und dem Spanngewinde 3 geführt. Dazu ist der Futterkörper 1 an seinem der Einspannöffnung 7 zugewandten Ende mit einem Führungszapfen 21 versehen, der über eine radiale Ringfläche 22 an das verjüngte Ende der Kegelfläche 9 anschließt. Die Spannhülse 4 ist mit einer radial einspringenden Ringschulter 23 an der Umfangsfläche des Führungszapfens 21 geführt. Dabei ist der Führungszapfen 21 im Durchmesser so klein gewählt, daß in der Spannhülse 4 die Führungsbohrungen 8 für die Spannbacken 5 im Bereich der Ringschulter 23 rundum vollständig geschlossen sind. Andererseits ist der Durchmesser des Führungszapfens 21 groß genug, um axial den Durchtritt einer zentralen Bohrung 36 des Futterkörpers 1 zu ermöglichen, die die Einspannöffnung 7 mit der Aufnahme 2 verbindet und durch die hindruch eine von der Bohrspindel ausgehende Schlagwirkung mittels eines in der Bohrung 36 beweglich geführten Döppers direkt auf ein zwischen den Spannbacken 5 geführtes Bohrwerkzeug übertragen werden kann.

Schließlich weist der Sperring 11 einen an seinen Zahnkranz 12 angrenzenden Kragen 34 auf, der den Zahnkranz 12' und die Mündungen der Führungsbohrungen 8 an der Spannhülse 4 axial übergreift und an der Umfangsfläche 37 der Spannhülse 11 zusätzlich geführt ist.

## Patentansprüche

1. Nachspannendes Bohrfutter mit einem eine Aufnahme (2) für eine Bohrspindel bildenden, ein Spanngewinde (3) aufweisenden Futterkörper (1), einer am Futterkörper (1) drehbar geführten Spannhülse (4), ferner mit im Bohrfutter axial abgestützten Spannbacken (5), die zwischen sich eine mit der Futterachse (6) koaxiale Einspannöffnung (7) für den Werkzeugschaft bilden und an der Spannhülse (4) schräg zur Futterachse (6) verschiebbar geführt sind, so daß sie sich bei ihrer Verschiebung auch radial zur Futterachse (6) verstellen und den Durchmesser der Einspannöffnung (7) verändern, und mit einem Sperring (11), der am Futterkörper (1) jeweils zwischen zwei Endstellungen in Umfangsrichtung gegen Federkraft verdrehbar und axial verschiebbar und in Umfangsrichtung mit der Spannhülse (4) über zwei Zahnkränze (12, 12') kuppelbar ist, die in der dem eingekuppelten Zustand entsprechenden axialen Endstellung des Sperrings (11) miteinander im Eingriff stehen, dadurch gekennzeichnet, daß der Futterkörper (1) eine mit ihren Mantelgeraden jeweils parallel zur Führungsrichtung der Spannbacken (4) verlaufende Kegelfläche (9) aufweist, auf der sich das Spanngewinde (3) befindet, das an jeder Spannbacke (5) mit einer Querverzahnung (10) im Eingriff steht, die sich an der Spannbacke (5) parallel zu ihrer Führungsrichtung erstreckt, wobei die der Einspannöffnung (7) zugewandten Flanken (3') der Gewindegänge des Spanngewindes (3) und die daran zur Anlage kommenden Zahnflanken (10') der Querverzahnung (10) der Spannbacken (4) im wesentlichen senkrecht zur Führungsrichtung der jeweiligen Spannbacke (5) gerichtet sind, daß die mit ihrem geführten Teil im wesentlichen als zylindrische Bolzen ausgebildeten Spannbacken in der gegen Axialverschiebungen am Futterkörper (1) festgehaltenen Spannhülse (4) in Führungsbohrungen (8) laufen, die an der hinteren Stirnfläche der Spannhülse (4) offen münden und dort von dem Sperring (11) verdeckt sind, und daß die Federkraft den Sperring (11) in dem dem Öffnen des Bohrfutters entsprechenden Drehsinn der Spannhülse (4) beaufschlagt.

2. Bohrfutter nach Anspruch 1, dadurch gekennzeichnet, daß das der Einspannöffnung (7) zugewandte Ende des Futterkörpers (1) von einem mit der Futterachse (6) koaxialen Führungszapfen (21) gebildet ist, der über eine radial auswärts gerichtete Ringfläche (22) an das verjüngte Ende der Kegelfläche (9) anschließt, und daß die Spannhülse (4) mit einer radial einwärts gerichteten Ringschulter (23) an der Umfangsfläche (24) des Führungszapfens (21) geführt ist.

3. Bohrfutter nach Anspruch 2, dadurch gekennzeichnet, daß die Spannhülse (4) im Bereich der Ringschulter (23) rundum vollständig geschlossene Führungsbohrungen (8) für die Spannbacken (5) aufweist.

4. Bohrfutter nach einem der Ansprüche 1 bis 3, dadurch gekennzeichnet, daß die Spannhülse (4) und der Futterkörper (1) durch einen Federring (20) aneinander gehalten sind, der in sich gegenüber liegende Ringnuten an Futterkörper (1) und Spannhülse (4) greift und tellerfederartig ausgebildet ist, so daß er die Spannhülse (4) relativ zum Futterkörper (1) axial nach vorn drückt.

5. Bohrfutter nach einem der Ansprüche 1 bis 3, dadurch gekennzeichnet, daß die Spannhülse (4) an ihrem dem Sperring (11) zugewandten Ende einen geteilten Ring (25) trägt, der mit seinem radial inneren Rand in eine Ringnut (26) des Futterkörpers (1) greift und an seinem radial äußerem Rand den der Spannhülse (4) zugeordneten Zahnkranz (12') bildet.

6. Bohrfutter nach Anspruch 5, dadurch gekennzeichnet, daß der geteilte Ring (25) von plattenartigen Ringsegmenten (25') gebildet ist, die auf der das Ende der Spannhülse (4) bildenden ringförmigen Stirnfläche (27) befestigt sind.

7. Bohrfutter nach Anspruch 6, dadurch gekennzeichnet, daß die Ringsegmente (25') mit Schrauben (28) lösbar auf der Stirnfläche (27) befestigt sind.

8. Bohrfutter nach einem der Ansprüche 1 bis 7, dadurch gekennzeichnet, daß zur Drehbegrenzung des Sperrings (11) der Futterkörper (1) einen radial abstehenden Anschlagstift (17) trägt, der in eine zum Futterkörper (1) und zur Spannhülse (4) hin offene Ausnehmung (18) des Sperrings (11) greift, die in Umfangsrichtung größer als die Dicke des Anschlagstiftes (17) ist und deren Enden (18', 18") in Umfangsrichtung Anschlagflächen für den Anschlagstift (17) bilden, und daß der Sperring (11) radial außerhalb der Ausnehmung (18) den ihm zugeordneten Zahnkranz (12) aufweist.

9. Bohrfutter nach einem der Ansprüche 1 bis 7, dadurch gekennzeichnet, daß zur Drehbegrenzung des Sperrings (11) der Futterkörper (1) an seiner Umfangsfläche eine ebene Sekantenfläche (29) aufweist, der gegenüber an der inneren Umfangsfläche des Sperrings (11) zwei ebene Anschlagflächen (30', 30") vorgesehen sind, die in einer zur Futterachse (6) parallelen Kante (30) aneinander grenzen und nun diese Kante (30) als Achse um den für den Sperring (11) als größtmöglich vorgegebenen Drehwinkel gegeneinander geneigt sind.

10. Bohrfutter nach Anspruch 9, dadurch gekennzeichnet, daß die Sekantenfläche (29) und die Anschlagflächen (30', 30") paarweise einander diametral gegenüber liegend am Futterkörper (1), bzw. Sperring (11) vorgesehen sind.

11. Bohrfutter nach Anspruch 9 oder 10, dadurch gekennzeichnet, daß der Raum zwischen der Sekantenfläche (29) und den ihr gegenüber liegenden Anschlagflächen (30', 30") an einen durch die Wand des Sperrings (11) nach außen führenden Reinigungskanal (31) angeschlossen ist.

12. Bohrfutter nach einem der Ansprüche 1 bis 11, dadurch gekennzeichnet, daß zur Erzeugung der in Umfangsrichtung wirkenden Federkraft eine Schraubenfeder (15) vorgesehen ist, die in einer Ringnut (16) zwischen dem Futterkörper (1) und dem Sperring (11) angeordnet ist und deren Enden (15') in Umfangsrichtung einerseits am Futterkörper (1), andererseits am Sperring (11) abgestützt sind.

13. Bohrfutter nach Anspruch 12, dadurch gekennzeichnet, daß die Schraubenfeder (15) den Sperring (11) in seiner dem eingekuppelten Zustand entsprechenden axialen Endstellung hält, wozu die schraubenfeder (15) zwecks Erzeugung der axial wirkenden Federkraft auch axial einerseits am Futterkörper (1) und andererseits am Sperring (11) abgestützt ist.

14. Bohrfutter nach einem der Ansprüche 1 bis 12, dadurch gekennzeichnet, daß eine den Sperring (11) in seinen dem eingekuppelten bzw. ausgekuppelten Zustand entsprechenden beiden axialen Endstellungen haltende Rasteinrichtung vorgesehen ist, welche die Drehung des Sperrings (11) unbehindert läßt.

15. Bohrfutter nach Anspruch 14, dadurch gekennzeichnet, daß die Rasteinrichtung mindestens eine radial am Sperring (11) gegen den Futterkörper (1) vorstehende Rastzunge (32) aufweist, die in axialer Richtung elastisch verformbar ist und je nach Endstellung des Sperrings (11) in eine von zwei parallel nebeneinander am Futterkörper (1) vorgesehene Rastnuten (33', 33") greift, in welchen die Rastzunge (32) in Umfangsrichtung verschiebbar ist.

16. Bohrfutter nach Anspruch 15, dadurch gekennzeichnet, daß die Rastzungen (32) zu mehreren verteilt über den Umfang des Sperrings (11) angeordnet und die Rastnuten (33', 33") als Ringnuten ausgebildet sind.

17. Bohrfutter nach Anspruch 15 oder 16, dadurch gekennzeichnet, daß die Rastzungen (32) mit der Zungenwurzel an den Zahnkranz (12) des Sperrings (11) angrenzen.

18. Bohrfutter nach einem der Ansprüche 1 bis 17, dadurch gekennzeichnet, daß der Sperring (11) einen an seinen Zahnkranz (12) angrenzenden Kragen (34) aufweist, der den Zahnkranz (12') und die Mündungen der Führungsbohrungen (8) für die Spannbacken (5) an der Spannhülse (4) axial übergreift und an der Umfangsfläche der Spannhülse (4) geführt ist.

**Revendications**

1. Mandrin à resserrage, comprenant un corps de mandrin (1) formant un logement (2) pour une broche de perçage et muni d'un filetage de serrage (3), une douille de serrage (4) guidée de manière tournante sur le corps de mandrin (1), ainsi que des mâchoires de serrage (5) qui s'appuient axialement dans le mandrin de serrage, forment entre elles, coaxialement par rapport à l'axe (6) du mandrin, une ouverture de fixation (7) pour la tige de l'outil et sont guidées sur la douille de serrage (4) de façon à pouvoir être déplacées en oblique par rapport à l'axe (6) du mandrin, de telle façon que, lors de leur déplacement, elles se déplacent également radialement par rapport à l'axe (6) du mandrin et modifient le diamètre de l'ouverture de fixation (7), et une bague de blocage (11), qui, contre la force d'un ressort, peut respectivement être tournée sur le corps du mandrin (1), dans le sens circonférentiel entre deux positions extrêmes et déplacée axialement, et couplée dans le sens circonférentiel avec la douille de serrage (4) par l'intermédiaire de deux couronnes dentées (12, 12') qui, dans la position axiale extrême de la bague de blocage (11) correspondant à l'état couplé, sont en prise l'une avec l'autre, caractérisé par le fait que le corps de mandrin (1) présente une surface conique (9) dont les génératrices sont respectivement orientées parallèlement à la direction de guidage des mâchoires de serrage (5) et sur laquelle se trouve le filetage de serrage (3) qui est en prise, sur chaque mâchoire de serrage (5), avec une denture transversale (10) qui s'étend sur la mâchoire de serrage (5) parallèlement à sa direction de guidage, les flancs (3') des pas de vis du filetage de serrage (3) dirigés vers l'ouverture de fixation (7) et les flancs de dents (10') de la denture transversale (10) des mâchoires de serrage (5) venant en contact avec ceux-ci étant orientés sensiblement perpendiculairement à la direction de guidage de la mâchoire de serrage (5) considérée; que les mâchoires de serrage dont la partie guidée est conformée sensiblement en axe cylindrique se déplacent, à l'intérieur de la douille de serrage (4) retenue sur le corps de mandrin (1) de façon à empêcher des déplacements axiaux, dans des alésages de guidage (8) qui débouchent à l'extérieur de la surface frontale postérieure de la douille de serrage (4) où ils sont masqués par la bague de blocage (11); et que l'action du ressort sollicite la bague de blocage (11) dans le sens de rotation de la douille de serrage (4) qui correspond à l'ouverture du mandrin de serrage.

2. Mandrin de serrage selon la revendication 1, caractérisé par le fait que l'extrémité du corps de mandrin (1) dirigée vers l'ouverture de fixation (7) est constituée par un tourillon de guidage (21) disposé coaxialement par rapport à l'axe (6) du mandrin et se raccordant, par l'intermédiaire d'une surface annulaire (22) orientée radialement vers l'extérieur, à l'extrémité rétrécie de la surface conique (9); et que la douille de serrage (4) est guidée, avec un épaulement annulaire (23) dirigé radialement vers l'intérieur, sur la surface périphérique (24) du tourillon de guidage (21).

3. Mandrin de serrage selon la revendication 2, caractérisé par le fait que la douille de serrage (4) présente, dans la région de l'épaulement annulaire (23), des alésages de guidage (8) pour les mâchoires de serrage (5) entièrement fermés sur tout le pourtour.

4. Mandrin de serrage selon l'une quelconque des revendications 1 à 3, caractérisé par le fait que la douille de serrage (4) et le corps de mandrin (1) sont maintenus ensemble par une rondelle-ressort (20) qui s'engage dans des gorges annulaires opposées sur le corps de mandrin (1) et la douille de serrage (4) et est conformée en rondelle conique, de sorte qu'elle pousse la douille de serrage (4) axialement vers l'avant par rapport au corps de mandrin (1).

5. Mandrin de serrage selon l'une quelconque des revendications 1 à 3, caractérisé par le fait que la douille de serrage (4) porte à son extrémité dirigée vers la bague de blocage (11) une bague divisée (25) qui s'engage avec son bord radialement intérieur dans une gorge annulaire (26) du corps de mandrin (1) et forme sur son bord radialement extérieur la couronne dentée (12') associée à la douille de serrage (4).

6. Mandrin de serrage selon la revendication 5, caractérisé par le fait que la bague divisée (25) est constituée par des segments d'anneau (25') en forme de plaques qui sont fixés de manière amovible sur la surface frontale (27) annulaire formant l'extrémité de la douille de serrage (4).

7. Mandrin de serrage selon la revendication 6, caractérisé par le fait que les segments d'anneau (25') sont fixés de manière amovible sur la surface frontale (27) au moyen de vis (28).

8. Mandrin de serrage selon l'une quelconque des revendications 1 à 7, caractérisé par le fait que, pour la limitation du mouvement de rotation de la bague de blocage (11), le corps de mandrin (1) porte un goujon d'arrêt (17) dépassant dans le sens radical, lequel s'engage dans un évidement (18) de la bague de blocage (11) ouvert en direction du corps de mandrin (1) et de la douille de serrage (4), qui est plus grand dans le sens circonférentiel que l'épaisseur du goujon d'arrêt (17) et dont les extrémités (18', 18") forment, dans le sens circonférentiel, des surfaces d'arrêt pour le goujon d'arrêt (17); et que la bague de blocage (11) comporte radialement à l'extérieur de l'évidement (18) la couronnee dentée (12) qui lui est associée.

9. Mandrin de serrage selon l'une quelconque des revendications 1 à 7, caractérisé par le fait que, pour la limitation de la rotation de la bague de blocage (11), le corps de mandrin (1) présente sur sa surface périphérique une surface de sécante plane (29) en face de laquelle sont prévues, sur la surface périphérique intérieure de la bague de blocage (11), deux surfaces d'arrêt planes (30', 30") qui se terminent en une arête (30) parallèle à l'axe (6) du mandrin et qui sont inclinées l'une vers l'autre autour de cette arête (30) comme axe, de l'angle de rotation maximum possible prédéterminé pour la bague de blocage (11).

10. Mandrin de serrage selon la revendication 9, caractérisé par le fait que la surface de sécante (29) et les surfaces d'arrêt (30', 30") sont disposées par paires diamétralement en face l'une de l'autre sur le corps de mandrin (1) et respectivement sur la bague de blocage (11).

11. Mandrin de serrage selon l'une des revendications 9 ou 10, caractérisé par le fait que l'espace libre entre la surface de sécante (29) et les surfaces d'arrêt (30', 30") situées un face de cette dernière, est raccordé à un canal de nettoyage (31) conduisant vers l'extérieur, au travers de la paroi de la bague de blocage (11).

12. Mandrin de serrage selon l'une quelconque des revendications 1 à 11, caractérisé par le fait que, pour la génération de la force de ressort agissant dans le sens circonférentiel, il est prévu un ressort cylindrique (15) qui est disposé dans une gorge annulaire (16) entre le corps de mandrin (1) et la bague de blocage (11) et dont les extrémités (15') prennent appui, dans le sens circonférentiel, sur le corps de mandrin (1) d'une part et sur la bague de blocage (11) d'autre part.

13. Mandrin de serrage selon la revendication 12, caractérisé par le fait que le ressort cylindrique (15) maintient la bague de blocage (11) dans sa position de fin de course axiale correspondant à l'état couplé, raison pour laquelle le ressort cylindrique (15) s'appuie également dans le sens axial sur le corps de mandrin (1) d'une part et sur la bague de blocage (11) d'autre part, en vue de générer une force de ressort agissant dans le sens axial.

14. Mandrin de serrage selon l'une quelconque des revendications 1 à 12, caractérisé par le fait qu'il comprend un dispositif à crans qui maintient la bague de blocage (11) dans ses deux positions axiales extrêmes correspondant à l'étant couplé et respectivement découplé et ne gêne pas la rotation de la bague de blocage (11).

15. Mandrin de serrage selon la revendication 14, caractérisé par le fait que le dispositif à crans comprend au moins une languette d'arrêt (32) dépassant radialement de la bague de blocage (11) en direction du corps de mandrin (1), qui peut être déformée élastiquement dans le sens axial et s'engager, selon la position de fin de course de la bague de blocage (11), dans l'une des deux encoches parallèles (33', 33") prévues l'une à côté de l'autre sur le corps de mandrin (1) et dans lesquelles la languette d'arrêt (32) est déplaçable dans le sens circonférentiel.

16. Mandrin de serrage selon la revendication 15, caractérisé par le fait que les languettes d'arrêt (32) sont répartiés à plusieurs sur la périphérie de la bague de blocage (11) et que les encoches (33', 33") sont conformées en rainures annulaires.

17. Mandrin de serrage selon l'une des revendications 15 ou 16, caractérisé par le fait que les racines des languettes d'arrêt (32) avoisinent la couronne dentée (12) de la bague de blocage (11).

18. Mandrin de serrage selon l'une quelconque des revendications 1 à 17, caractérisé par le fait que la bague de blocage (11) présente un collet (34) contigue à sa couronne dentée (12), qui recouvre axialement la couronne dentée (12') et les ouvertures des alésages de guidage (8) pour les mâchoires de serrage (5) sur la douille de serrage (4) et est guidé sur la surface périphérique de la douille de serrage (4).

**Claims**

1. A re-tightening drilling chuck comprising a chuck body (1) which forms a receiving means (2) for a drilling spindle and which has a clamping screwthread (3), a clamping sleeve (4) which is mounted rotatably on the chuck body (1), clamping jaws (5) which are axially supported in the drilling chuck and which form between them a clamping opening (7), which is coaxial with the chuck axis (6), for the tool shank, and which are guided displaceably on the clamping sleeve (4) inclinedly with respect to the chuck axis (6) so that upon displacement thereof they are also displaced radially with respect to the chuck axis (6) and alter the diameter of the clamping opening (7), and further comprising a locking ring (11) which is rotatable in the peripheral direction against a spring force and axially displaceable on the chuck body (1) between two limit positions in each case and which can be coupled in the peripheral direction to the clamping sleeve (4) by way of two annular tooth arrangements (12, 12') which are in engagement with each other in the axial limit position of the locking ring (11), which corresponds to the coupled condition, characterised in that the chuck body (1) has a taper surface (9) which extends with its respective generatrix parallel to the guide direction of the respective clamping jaw (4) and on which is disposed the clamping screwthread (3) which is in engagement on each clamping jaw (5) with a transverse tooth configuration (10) which extends on the clamping jaw (5) parallel to the guide direction thereof, wherein the flanks (3'), which are towards the clamping opening (7), of the screwthread pitches of the clamping screwthread (3) and the tooth flanks (10') which come to bear thereagainst of the transverse tooth configuration (10) of the clamping jaws (5) are directed substantially perpendicularly to the guide direction of the respective clamping jaw (5), that the clamping jaws which with their guided portion are substantially in the form of cylindrical pins move in the clamping sleeve (4) which is restrained from axial displacement on the chuck body (1), in guide bores (8) which open at the rear end face of the clamping sleeve (4) where they are covered by the locking ring (11), and that the spring force acts on the locking ring (11) in the direction of rotation of the clamping sleeve (4), which corresponds to opening of the chuck.

2. A drilling chuck according to claim 1 characterised in that the end of the chuck body (1), which is towards the clamping opening (7), is formed by a guide projection (21) which is coaxial with the chuck axis (6) and which by way of a radially outwardly directed annular surface (22) adjoins the tapered end of the taper surface (9), and that the clamping sleeve (4) is guided with a radially inwardly directed annular shoulder (23) against the peripheral surface (24) of the guide projection (21).

3. A drilling chuck according to claim 2 characterised in that the clamping sleeve (4) has guide bores (8) for the clamping jaws (5), which are entirely closed therearound in the region of the annular shoulder (23).

4. A drilling chuck according to one of claims 1 to 3 characterised in that the clamping sleeve (4) and the chuck body (1) are held together by a spring ring (20) which engages into mutually oppositely disposed annular grooves on the chuck body (1) and the clamping sleeve (4) and which is of a diaphragm spring-like configuration so that it urges the clamping sleeve (4) axially forwardly relative to the chuck body (1).

5. A drilling chuck according to one of claims 1 to 3 characterised in that at its end towards the locking ring (11) the clamping sleeve (4) carries a divided ring (25) which with its radially inward edge engages into an annular groove (26) in the chuck body (1) and which at its radially outward edge forms the annular tooth arrangement (12') associated with the clamping sleeve (4).

6. A chuck according to claim 5 characterised in that the divided ring (25) is formed by plate-like ring segments (25') which are fixed on the annular end face (27) which forms the end of the clamping sleeve (4).

7. A chuck according to claim 6 characterised in that the ring segments (25') are releasably fixed by screws (28) to the end face (27).

8. A chuck according to one of claims 1 to 7 characterised in that for restricting rotary movement of the locking ring (11) the chuck body (1) carries a radially projecting stop pin (17) which engages into an opening (18) in the locking ring (11), which is open towards the chuck body (1) and towards the clamping sleeve (4) and which is larger in the peripheral direction than the thickness of the stop pin (17) and the ends (18', 18") of which form stop surfaces for the stop pin (17) in the peripheral direction, and that the locking ring (11) has the annular tooth arrangement (12) associated therewith, radially outside the opening (18).

9. A chuck according to one of claims 1 to 7 characterised in that, for restricting rotary movement of the locking ring (11) the chuck body (1) is provided at its peripheral surface with a flat secant surface (29) and opposite same there are provided on the inward peripheral surface of the locking ring (11) two flat stop surfaces (30', 30") which adjoin each other in an edge (30) parallel to the chuck axis (6) and which are inclined relative to each other about said edge (30) as an axis about the angle of rotary movement which is preset as the maximum for the locking ring (11).

10. A chuck according to claim 9 characterised in that the secant surface (29) and the stop surfaces (30', 30") are provided in pairs in mutually diametrally oppositely disposed relationship on the chuck body (1) and the locking ring (11) respectively.

11. A chuck according to claim 9 or claim 10 characterised in that the space between the secant surface (29) and the stop surfaces (30', 30") which are disposed in opposite relationship thereto is connected to a cleaning passage (31) which leads outwardly through the wall of the locking ring (11).

12. A chuck according to one of claims 1 to 11 characterised in that to produce the spring force which is operative in the peripheral direction, there is provided a coil spring (15) which is disposed in an annular groove (16) between the chuck body (1) and the locking ring (11) and the ends (15') of which are supported in the peripheral direction on the one hand against the chuck body (1) and on the other hand against the locking ring (11).

13. A chuck according to claim 12 characterised in that the coil spring (15) holds the locking ring (11) in its axial limit position corresponding to the coupled condition, for which purpose the coil spring (15) is also supported axially on the one hand against the chuck body (1) and on the other hand against the locking ring (11), for the purposes of producing the axially acting spring force.

14. A chuck according to one of claims 1 to 12 characterised in that there is provided a retaining means which holds the locking ring (11) in its two axial limit positions corresponding to the coupled and uncoupled conditions respectively and which leaves the rotary movement of the locking ring (11) unimpeded.

15. A chuck according to claim 14 characterised in that the retaining means has at least one retaining tongue portion (32) which projects radially on the locking ring (11) towards the chuck body (1) and which is elastically deformable in the axial direction and which depending on the respective limit position of the locking ring (11) engages into a respective one of two retaining grooves (33', 33") which are provided in parallel juxtaposed relationship on the chuck body (1) and in which the retaining tongue portion (32) is displaceable in the peripheral direction.

16. A chuck according to claim 15 characterised in that the retaining tongue portions (32) are arranged in a plurality distributed over the periphery of the locking ring (11) and the retaining grooves (33', 33") are in the form of annular grooves.

17. A chuck according to claim 15 or claim 16 characterised in that the retaining tongue portions (32) have the root parts thereof adjoining the annular tooth configuration (12) of the locking ring (11).

18. A chuck according to one of claims 1 to 17 characterised in that the locking ring (11) has a collar portion (34) which adjoins its annular tooth arrangement (12) and which engages axially over the annular tooth arrangement (12') and the mouth openings of the guide bores (8) for the clamping jaws (5) on the clamping sleeve (4) and is guided at the peripheral surface of the clamping sleeve (4).

Fig. 2

Fig. 1

Fig. 3

Fig. 5

Fig. 4

Fig. 6

**Fig. 7**

Fig. 8